(19) 

**Europäisches Patentamt**
**European Patent Office**
**Office européen des brevets**

(11) **EP 4 523 158 B1**

(12) **EUROPEAN PATENT SPECIFICATION**

(45) Date of publication and mention
of the grant of the patent:
**11.03.2026 Bulletin 2026/11**

(21) Application number: **23739130.5**

(22) Date of filing: **23.06.2023**

(51) International Patent Classification (IPC):
**G06Q 10/00** (2026.01)     **G06Q 10/10** (2023.01)

(52) Cooperative Patent Classification (CPC):
**G06Q 10/00; G06Q 10/10**

(86) International application number:
**PCT/EP2023/067087**

(87) International publication number:
**WO 2024/002888 (04.01.2024 Gazette 2024/01)**

(54) **CLASSIFICATION METHOD AND DEVICE**

KLASSIFIKATIONSVERFAHREN UND -VORRICHTUNG

PROCÉDÉ ET DISPOSITIF DE CLASSIFICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.06.2022 EP 22181611**

(43) Date of publication of application:
**19.03.2025 Bulletin 2025/12**

(73) Proprietor: **Siemens Aktiengesellschaft**
**80333 München (DE)**

(72) Inventors:
• **BRIKIS, Georgia Olympia**
**Plainsboro, NJ 08536 (US)**
• **HASAN, Rakebul**
**84036 Landshut (DE)**

• **HILDEBRANDT, Marcel**
**80805 München (DE)**
• **JOBLIN, Mitchell**
**Surrey, BC V4A 8S7 (CA)**
• **DONEVA, Aneta**
**81373 München (DE)**
• **MOGOREANU, Serghei**
**81827 München (DE)**
• **RINGSQUANDL, Martin**
**83064 Raubling (DE)**

(74) Representative: **Siemens Patent Attorneys**
**Postfach 22 16 34**
**80506 München (DE)**

(56) References cited:
**US-A1- 2021 150 346     US-B1- 11 321 580**

**Description**

Field of the Invention

The invention relates to a computer implemented method for classification of an object. The invention further refers to a corresponding classification device and computer program.

Background

Classification of objects is, when there are many different objects and classes into which the objects are to be classified, time consuming and prone to errors.

An example is the classification of objects to different material classes, where material denotes a certain good, e.g., a screw or a certain component of a product, e.g., an electrical component.

An exemplary use case is the to assign the materials to a certain class, because e.g., only certain screws or chipsets can be used within the given technical framework.

Another exemplary use case is an efficient material purchasing process, wherein it is sought to purchase larger volumes in order to reduce e.g., effort to have the goods packed or transported or eventually also prizes. To get larger volumes, corporations try to pool as many purchase requests for the same or equivalent materials together as possible.

However, pooling is challenging for corporations with multiple engineering departments with a sizable number of materials. This is because purchasing requests for similar materials from different departments are not aligned. For example, department D1 requests 10,000 stainless-steel 10mm screws from manufacturer M1 and at the same time department D2 requests 5,000 SS 0.1cm diam DIN912 from manufacturer M2.

If it were known that these two material requests refer to an equivalent material, procurement could pool both requests and order 15,000 screws from either manufacturer M1 or M2 - thus, reducing efforts and costs.

Determining pooling candidates is difficult, especially considering that large corporations use millions of unique materials each year. One step to reduce complexity is to introduce a corporation-wide classification system (taxonomy) for materials. This material taxonomy is usually organized in multiple hierarchical levels resulting in a tree-structure, e.g., "eclass", see also https://www.eclass.eu/, is an ISO/IEC standardized industrial taxonomy, where child classes are further distinguished from the parent by means of e.g., material properties such as size or finishing, the application area such as packaging, construction, machining, or the market branch such as logistics, sport, optics.

The task of the engineer is now to assign each new material to one of the classes in the taxonomy, preferably to the most specific level. In a taxonomy in form of a tree, the topmost leaf nodes of the tree would represent the classes. "Intermediate classes or labels" would be represented by nodes at lower levels of the tree.

This assures that similar material requests end up at the at the dedicated pooling expert for that class. To make the taxonomy more human-readable, each class is usually also described via a non-ambiguous textual definition. For example, there could be a class with the description stainless-steel screws <= 12mm.

In whole, as it was said, classification is time consuming and prone to errors, while it is needed manyfold in the context of production processes.

Accordingly, it is an object of the present invention to provide a possibility to reduce the required time and furthermore to enhance the accurateness of the classification.

Document US 11 321 580 B1 (WALCZAK KRZYSZTOF MARCIN [US] ET AL) discloses systems and method for learning and predicting item types. Therefore a machine learning model is obtained or accessed that has been previously trained to classify an input item to a browse node. Document US 2021150346 A1 discloses a perception model that is trained to classify inputs in relation to a discrete set of leaf node classes and a hierarchical classification tree.

Brief Summary of the Invention

This is achieved by what is disclosed in the independent claims. Advantageous embodiments are described in the dependent claims.

According to a first aspect, a computer implemented method for classification of an object is proposed. The object, e.g., a screw made of a certain material and of a certain size, is sought to be classified in a common group or class containing objects having at least one common property.

The classes are arranged in a taxonomy tree and for the classification of the object into a class a trained link prediction model is used.

By a link prediction model links between two entities can be predicted, e.g., between an object and a class.

As an input to the link prediction model a textual description of an object and the taxonomy tree is used.

For example, a textual description can be "screw, stainless steel, 12mm", or "CPU, Intel®, Core™ i5-8365U,CPU@1.60GHz".

The taxonomy tree comprises nodes and directed edges which lead from a root node across nodes in at least one intermediate level to leaf nodes, from which no further edge emerges, in other words, the leaf nodes do not have child nodes themselves. The leaf nodes denote class labels, the intermediate nodes denote intermediate classes.

In the example of the screws an intermediate class could be "screw" or at a subsequent level "screw, stainless steel". In the example of the electronic components, an intermediate class could be "CPU".

Advantageously, an intermediate class label is formed by adding, at a node, a further description element, e.g., a word or an n-gram, to the description represented by the parent node.

Comprised in the taxonomy tree is structure information defined by a branching ratio at each node and the number of levels. By branching ratio, the number of directed edges leading away from a node is described or, equivalently the number of its child nodes.

Regarding levels, e.g., a first level is defined by nodes being one edge or "one hop" apart from the root node, a second level by nodes two hops apart from the root node and so on.

As an example, at a first level one node can have two child nodes, another the same or a different number of child nodes.

When the link prediction model is applied, this structure information is used in order to reduce the number of computations by only following selected paths from the root node to leaf nodes. Thus, not the whole taxonomy tree is investigated but only a part thereof. As each pursued path includes calculations, by a reduction of paths also a reduction of computational effort can be achieved. Overall, the reduction can be realized by using a tree structure for the taxonomy and using structure information thereof.

Advantageously, a beam search is performed in the inference case: At each level, only for a predefined number of alternative nodes a score is determined that the textual description matches the intermediate class label. Then, only from the node with the highest score it is proceeded to the subsequent level. This is repeated, until the final level with the leaf nodes is reached. In this way, only a "beam" is pursued and thus the number of computations can be reduced significantly, while on the other side by an appropriate definition of the number of alternative nodes a "beam width" can be defined.

Advantageously the link prediction model is based on a neural network architecture, comprising an encoder network and a decoder network, wherein common token embedding vectors are used for the description and the class labels, whereby a token is advantageously an arbitrary part of the description.

Advantageously, for the training of the link prediction model, the training data are enhanced by making use of the tree structure, which indicates how likely it is to confound neighbored classes.

Advantageously, the training data can be enhanced by adding soft labels to the label which has been assigned to the textual description. This soft label indicates how likely it is that the true label is the noisy label obtained from the training data. The soft label is preferably determined by using a k nearest neighbor approach.

Advantageously, for each instance of training data a set of sibling classes to the noisy class label is taken as negative label. Thus, a loss function can be determined which considers also the instance of training data and the set of negative examples leading to a reduced computational effort.

According to another aspect the invention relates to a corresponding computer program and a classification device by use of which the computer program is carried out. Advantageously, the classification is applied in an engineering tool, where items can be added to a mechanical, electronical or electrical design. Therein, objects of one class, e.g., resistors, are provided to a user as an item. This helps the user to fit in the right type of item or to discover equivalent items.

Further the classification tool may be used for a logistics tool bundling tasks for objects of one class.

Further the classification tool may be used in connection with a maintenance recommender, wherein the proposed maintenance action depends on the class assigned to the object. Advantageously such classification tool can be realized on a computational unit or via a web interface.

Brief description of the drawings:

Further embodiments, features, and advantages of the present invention will become apparent from the subsequent description and dependent claims, taken in conjunction with the accompanying drawings of which show:

Fig. 1 For inference and training: an example of a taxonomy tree, which starts from a root node to its direct children nodes further proceeding through two levels to the respective children nodes before ending at the topmost third level in a leaf node representing a class;

Fig. 2 for a training case, a calculation of a probability that an assignment to a class is correct considering distances between classes represented by leaf nodes;

Fig. 3 for an inference case an exemplary embodiment of a link prediction model which uses as input the token embeddings of descriptions X and of class labels Y represented by leaf nodes of the taxonomy tree.

Fig. 4 an overview over training and application of the proposed link prediction model.

Technical problem

Material classification is typically still a manual process. As a first step, engineers provide a best guess by matching the definition of the material class to their material at hand which requires the engineers to familiarize themselves with the material class definitions.

At a later stage, pooling experts may correct the assigned class based on the descriptions, technical drawings, internet research for data sheets, etc., which is a cumbersome task. There are many approaches for machine learning with "noisy" labels, i.e., when for a given object or material the assigned label to the object varies. The goal is to limit the ML model's overfitting, i.e., using to many parameters for the approximation function, on noisy examples. This can be done with regularization techniques, soft labels, estimating the label noise transition matrix [2], or adversarial training [4].

Most of these techniques become computationally expensive when dealing with many classes and instances.

As said, machine learning (ML) can support engineers in the first step of determining to which class an object, e.g., a material should be assigned to, based on a short textual description. The technical difficulties lie in how to deal with the large number of classes and distinct objects, e.g., materials - typically on the order of thousands of classes and millions of objects, e.g., materials:

Such large-scale class spaces are prone to have many classes which cannot be easily discriminated from each other, even if a classification is made by human experts. Therefore, there are assignments of one description for an object to different class labels. This hampers the quality of the training data. In other words, noise is introduced in the class label for a description and there is an empirical loss [1], i.e., the training data are not as good as noiseless ones.

Large class spaces, i.e., spaces with many classes, mean that the ML models become computationally more expensive to train compared to common setups having only few classes.

The systems or methods proposed in this application therefore reduce the noise in class labels by assigning tree-weighted soft labels, i.e., labels determined by using the objects' taxonomy. For a training of an ML model a parameter-efficient ML model and training strategy is used that exploits the hierarchy of the object, e.g., the material taxonomy.

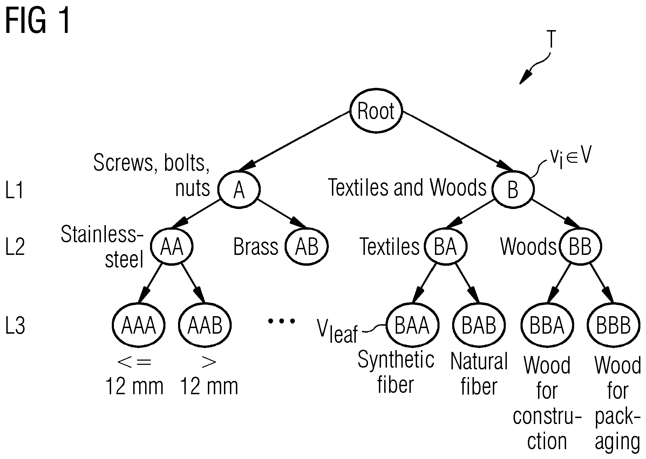

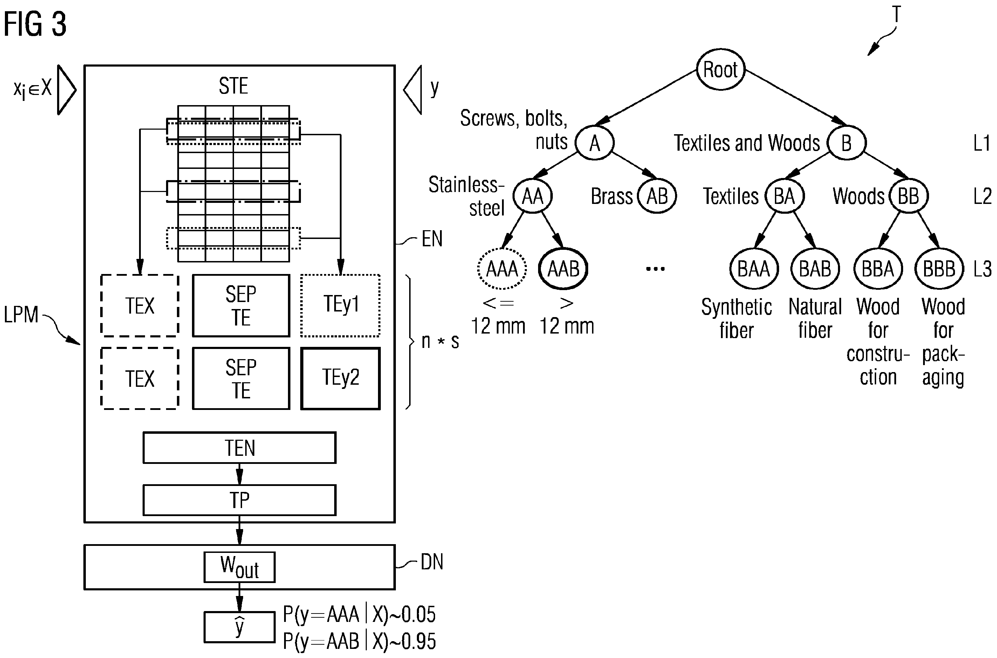

Object Taxonomy and Input to the ML model (Fig.1,3)

The objects and their dependencies are captured in a taxonomy tree which is depicted exemplarily in Fig.1.

The input to the ML model is on the one hand this taxonomy tree $T = (V,E)$ with node set $V$, i.e., a set of nodes which are connected by a directed edge set E. The edges are directed because the tree extends from the "root" node to "leaf" nodes. The leaf nodes are characterized in that they do not have an edge leading away from them, i.e., to a subsequent child node. Thus, mathematically a leaf node is expressed by

$$V_{leaf} = \{v_i \in V \mid \nexists_{v_j} : (v_i, v_j) \in E\},$$

where $v_i$ denotes an individual node for which no directed connection $(v_i, v_j)$ to another node $v_j$ exists.

On the other hand, the input to the ML model is a database

$$\mathbb{D} = \{ ((x_1, \widetilde{y_1}), (x_2, \widetilde{y_2}), \ldots (x_n, \widetilde{y_n}) \}$$

with textual object descriptions $x_i \in X$ and class labels $\tilde{y}_i$, where $\tilde{y}_i \in V_{leaf}$. In other words, a class is represented in the taxonomy tree by a node at the top level of the tree, i.e., the so-called leaf node $V_{leaf}$.

The ML model works in a link prediction setting, i.e., it models a function $f: X \times V_{leaf} \to \mathbb{R}$ from text input, e.g., the description of an object, times label space, e.g., containing the class labels. The function $f$ describes a probability that the true class label y is obtained when using the textual description x as input. Mathematically it would be expressed as $f(x, y) \sim P(y|x)$.

The following concepts reducing the computational effort will be detailed in this application:

1) Tree-weighted soft labeling procedure reducing the noise of the labels and thus reduce computational complexity, because the information contained in the training data is increased.

2) Link prediction architecture with negative sampling which again reduces the number of computations.

3) Tree-based beam search inference which reduces computational complexity when applying the model, i.e., in inference.

The taxonomy tree (Fig.1)

As said above, the objects and their dependencies are captured in a taxonomy tree. Fig. 1 depicts an example of a taxonomy tree T starting from a root node "Root" to first level children nodes A, B on a first level L1 of the tree. The first level children nodes represent objects with certain properties. The objects are described by a textual description.

In Fig.1 node "B" is exemplarily marked as a node $v_i \in V$. Of course, all other depicted nodes Root, A, B, AA, AB, BA, BB, AAA, AAB, BAA, BAB, BBA, BBB are also nodes $v_i$.

Further, node "BAA" is marked exemplarily as leaf node $V_{leaf}$. Of course, all the other nodes at the final third level L3 are also leaf nodes, i.e., AAA, AAB, BAA, BAB, BBA, BBB.

In an example of material classification node A is associated with the textual description "screws", "bolts" and "nuts" whereas node B is associated with the textual description "textiles" and "woods".

In a next level, the second level L2, a finer refinement of the objects is made. Thus, the second level children nodes AA, AB, BA, BB denote a subset, or at the most the set, of objects of their parent nodes, i.e., the textual description of each parent node A, B, is extended as to comprise terms describing further properties. Partial labels represented by these, intermediate, nodes are referred also to as intermediate labels or classes.

In the example of the material classification for node AA the description "stainless-steel" and for node AB the description "brass" may be added, so that these nodes are associated with a refined set of screws, bolts, or nuts.

In a subsequent third level L3 an even finer refinement of objects is made by adding further descriptions to these third level L3 children nodes. In the example of material classification the description "<= 12 mm" or ">12 mm" may be added.

In the example shown in Fig.1. with the third level L3 the "top" of the tree has been reached. The nodes at the third levels, which do not have child nodes themselves, denote the finest granularity available for the objects and thus the class assigned to an object.

As said, the taxonomy tree depicted in Fig.1 is an example. Other trees may use different branching factors b, which lead to a different number of branches. Further, the number of levels may be different, e.g., higher to express more complicated labels. Also, not all branches of a tree may be the same, e.g., some branches may stop at lower levels than others or the branching factors, i.e., number of branches emerging from one node may be different for different nodes.

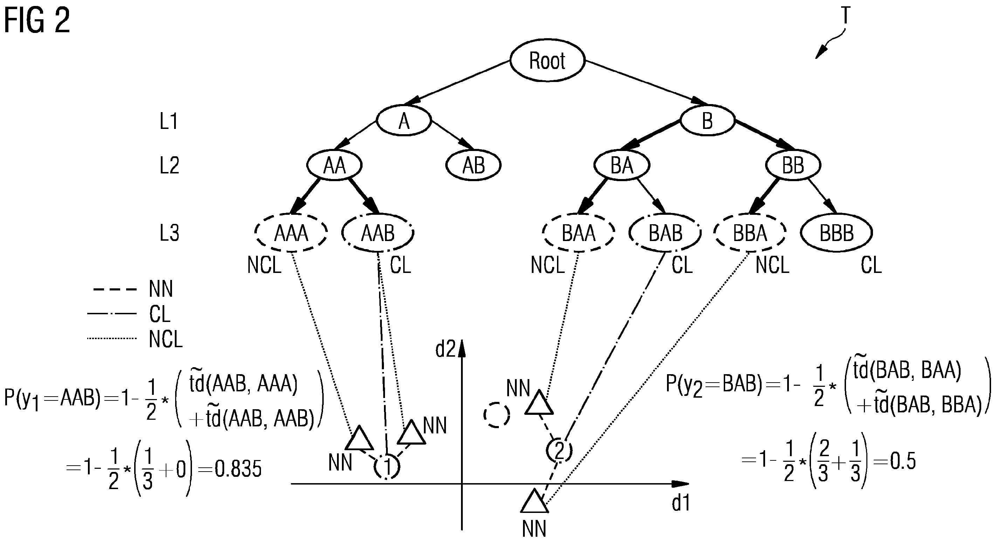

Tree-weighted soft labeling TWSL (Fig.2)

The assignment of class labels to objects, e.g., material descriptions, is assumed to be noisy, i.e., varies as they are typically introduced through manual annotation by engineers whose familiarity with the large number of objects, e.g., material class definitions can differ.

This means that the true label $y_i$ is not the assigned label $\tilde{y}_i$, or mathematically expressed $y_i \neq \tilde{y}_i$ for some tuples ($x_i$, $\tilde{y}_i$). The label noise is considered to be instance-dependent, i.e., depends on the tuples ($x_i, \tilde{y}_i$) or, mathematically expressed

$$P(\tilde{y}|y, x) \neq P(\tilde{y}|y),$$

hence the label noise distribution is different depending on the material description.

The taxonomy provides a tree-based distance measure between classes represented by leave nodes. The tree distance between two classes or labels $y_1$, $y_2$ in a given tree T is defined as follows:

$$td(y_1, y_2) = shortest\_path\,(y_1, y_2, T)$$

This distance can be standardized by normalizing it with regard to the maximum distance in the taxonomy tree so that it assumes values between 0 and 1:

$$\widetilde{td}(y_1, y_2) = \frac{td(y_1, y_2)}{\max\limits_{i,j} td(y_i, y_j)}, \qquad \widetilde{td}: VxV \rightarrow [0,1].$$

As measure for the distance, the number of hops, i.e., distances from one node to the other is taken.

Intuitively the tree distance between labels is a way of quantifying how severe the label noise is. The higher the tree distance between true labels and noisy labels, the more disruptive is the process responsible for generating label noise.

Since there is usually no access to a large dataset with true labels $y_i$ for given object descriptions $x_i$, it is necessary to find an approximation that estimates the label noise.

According to an aspect of the invention, for the estimation of label noise a so called "k-nearest-neighbor" (kNN) approach is pursued to estimate the probability of a label being noisy.

Several approaches can be used to obtain the kNNs in the X-space, e.g., if X is simply the bag-of-words or bag-of-n-gram representation of the material texts, then using Euclidean distance could be applied to find the kNNs.

In Fig.2 exemplarily two dimensions are used for the kNN search. As an example, if using a bag of words representation, d1 denotes the number of times a word appears in the description and d2 denotes the number of times another word appears in the description. Generally, the dimension of the description, e.g., all possible words contained in the data base or the class labels, are reduced so that fewer words are considered which are considered as relevant.

A bag of words representation considers how often each word appears in a given context, e.g., the data base or an entry of the data base, i.e., a textual description.

For a bag-of-n-gram representations a text, e.g., the object description is split into groups of words, e.g., groups of two words. Each group of words is represented by a unique vector which is used for encoding of the whole text. The whole text is then represented as a sequence of vectors.

Given the kNNs which are denoted by

$$D_{knn,i} = \left(x_{n_1}, \widetilde{y_{n_1}}\right), \left(x_{n_2}, \widetilde{y_{n_2}}\right), \dots \left(x_{n_k}, \widetilde{y_{n_k}}\right)$$

of an instance $(x_i, \tilde{y}_i) \in D$, the probability of the noisy label being true, $P(\tilde{y}_i = y_i)$ is defined as follows as follows:

$$P(\tilde{y}_i = y_i) = 1 - \frac{1}{k} \sum_{\widetilde{y_j} \in D_{knn,i}} \widetilde{td}(\tilde{y}_i, \tilde{y}_j)$$

Where k is the number of nearest neighbors,

$\tilde{y}_i$ is the assigned class label for textual description $x_i$ $y_i$ is the true call label for textual description $x_i$ J is a variable running through all the next neighbors, $\widetilde{td}(\tilde{y}_i, \tilde{y}_j)$ is the normalised distance between $\tilde{y}_i$, $\tilde{y}_j$.

Thus, the probability that the noisy label is true, $P(y_i = y_i)$, decreases with an increasing size of distance to the next neighbors.

This is similar to the known de-noising effect that kNN algorithms have, e.g., averaging neighboring pixels in images to eliminate noise. For the embodiments described in this application, the nearest neighbors serve as a way to estimate how noisy a label is in among its neighbors both in latent space and in taxonomy space.

In words, the weighted tree-distance gives a measure of confidence in the label being true.

In Figure 2, for a training case an exemplary two-dimensional X-space is given with the Euclidean distance determining k-nearest neighbors, represented by triangles for two training instances with noisy label 1, 2. In inference, an instance is formed by the description x only; in contrast, for the training an instance is formed by a tuple formed by the textual description $x_i$ and its -potential noisy- label $\tilde{y}_i$. From the instances 1 and 2 denoted by the encircled number 1 and 2, a dotted line leads to its respective nearest neighbors represented by a triangle.

To the instances 1, 2 a soft label is assigned, $\widetilde{y_1}$ and $\widetilde{y_2}$ via the above $P(\tilde{y}_i = y_i)$.

The path leading to the classes is used to calculate the tree distances:

For the example of instance 1, AAB und AAA have been determined as the two nearest neighbors NN denoting a neighbor class label NCL. AAB is taken as class label CL. The maximum distance in the depicted tree T is 6. The distance between AAA and AAB is two hops as indicated by the bold black line. The probability that the class label $y_1$ assigned to $x_1$ is AAB is then calculated as

$$P(y_1 = AAB) = 1 - \frac{1}{2} * \left( \begin{array}{c} \widetilde{td}(AAB, AAA) \\ +\widetilde{td}(AAB, AAB) \end{array} \right)$$

$$= 1 - \frac{1}{2} * \left( \frac{2}{6} + \frac{0}{6} \right) = 0.835$$

For the example of instance 2, as nearest neighbors NN the nodes BAA and BBA are determined, as class label BAB represented by another node is taken. The distance between the probability that the class label $y_2$ assigned to $x_2$ is BAB is then calculated as

$$P(y_2 = BAB) = 1 - \frac{1}{2}\left(\frac{\widetilde{td}(BAB,\ BAA)}{+\widetilde{td}(BAB, BBA)}\right)$$

$$= 1 - \frac{1}{2} * \left(\frac{2}{6} + \frac{4}{6}\right) = 1 - \frac{1}{2} * \left(\frac{1}{3} + \frac{2}{3}\right) = 0.5$$

For the training case, the soft labels are determined in that for a given instance denoted by tuple $(x_i, \breve{y}_i)$ the distance to neighbored classes is considered. Soft labels are not relevant for inference.

Shared embedding link prediction architecture (Fig.3)

In Fig.3 an example of an ML model employing a link prediction architecture is depicted. This model comprising an encoder and a decoder network is trained by using training data formed by instances $(x, \breve{y})$.

Then, by the trained model, predictions $\hat{y}$ with associated scores denoting a reliability that the predicted class label $\hat{y}$ is the true label $y$, are provided.

An inference case, i.e., an application of the trained link prediction model (LPM), is detailed below:
The ML model LPM used for the link prediction comprises an encoder network EN and a decoder network DN.

Input to the encoder network EN is a description $x_i$, e.g., "Screw, stainless steel, 10mm" out of a set of descriptions X, which may be contained in a data base DB.

Further, input is taken from the taxonomy tree T, whereby class labels y out of all available classes Y are provided, which are represented in the taxonomy tree by the leaves and the number of classes is the number of leaves, $|V_{leaf}|$.

The ML model LPM is made memory and computationally efficient by phrasing the classification problem as link prediction using a text token embedding space which is shared between the set of descriptions X and the set of class labels Y, i.e., the embedding space is defined by the same unique vectors or shared token embeddings STE for representing a token.

By "text token" an arbitrary part of the description x or the class label y is denoted. By shared embedding space is meant that the same vectors are used to represent a token, e.g., an n-gram.

Each class is encoded using its textual description in the taxonomy, denoted as *desc.* Further, the representation of $y_i$ is informed by its parent nodes in the taxonomy $T$ as follows:

$$desc_i^T = desc_i \cup \{desc_j | \forall_{V_j} \in path(root, V_i)\}.$$

In words, the description of class i for the given taxonomy tree T is the union set of its own description and all parent node's text descriptions. In other words, in each subsequent level new description text is added to the existing description. Thus, at intermediate levels, the nodes could be seen as representing "intermediate classes".

This procedure induces a tree-based regularization scheme in the class space since all classes that are in the branch of the taxonomy share parts of their descriptions. In the example in Fig. 1, the description x of class AAA would be "screws, bolts, nuts, stainless steel, <=12 mm".

Further as detailed above with reference to Fig.3, the ML model LPM comprises a one token embedding matrix which is shared in the encoder network EN when encoding inputs x and outputs, i.e., class labels y which are constructed according to the structure of the taxonomy tree T.

Therewith, the model input $x_i$, $y_i$ is transformed into an overall sequence vector comprising a sequence of vectors representing the token embeddings TEX of x separated by a separator token embedding SEP TE from the token embeddings TEy1, TEy2 of class labels in Y. In other words, in the encoder network EN token embeddings of x and the token embeddings of y with a separator token embedding between the two are encoded or embedded.

In the exemplary embodiment depicted in Fig. 3 the encoding networks EN comprises a transformer encoder TEN. Transformer networks are neural networks with special attention mechanisms, in particular self-attention mechanisms, in order to grasp dependencies between words in e.g., a sentence. This is advantageously used in connection with a classification scheme having a tree structure, where a child class always comprises the description of its parent class. The token embeddings of x and the token embeddings of y with a separator token embedding between the two form a first embedding step at the transformer network.

In the transformer network TEN an encoded overall sequence is produced. A token pooling TP, e.g., an averaging over the encoded overall sequence is performed. The pooled encoded overall sequence vector is fed into a decoder network DN, where a score $W_{out}$ is extracted for the pooled encoded overall sequence vector for the specific class label y1 or y2. The class label having the highest score $W_{out}$ is chosen as prediction $\hat{y}$.

$W_{out}$ is a vector of learnable parameters that projects the transformer embedding vector into a 1-dimension, i.e., scalar value, a score. In other words, $W_{out}$ is the projection vector that produces the score P(y|X), e.g., *P(y = AAA|X)~0.05*

and $P(y = AAB|X) \sim 0.95$.

As neural network used for the encoder EN, different types of neural networks can be employed, e.g., convolutional neural networks. According to an advantageous embodiment a transformer [3] encoder with self-attention is applied.

Tree-Based Negative Sampling TBNS (Fig.2)

For the training of the link prediction ML model or LPM an extension of these training data is used which makes use of the tree structure of the taxonomy tree T.

Since the input to the encoder network EN, comprising in particular a transformer network TEN, is the cross-product from every input x in the dataset X which is of size $n$, where n denotes the number of training sets, to every leaf class in the taxonomy, this becomes computationally expensive with a large number of leaf classes $|V_{leaf}|$.

To alleviate this issue by reducing the computational complexity during training of the model, the following remedy is proposed to reduce the number of computations $n * |V_{leaf}|$ to $n * s$, where the number s is much smaller than the number of classes, $s \ll |V_{leaf}|$. s denotes the number of regarded samples which consists of the specific instance and s-1 sibling samples in the case of a negative sampling which is based in the tree structure. The procedure is as follows:

1. Given an instance $(x, \tilde{y})$ in the training, which is input to the shared token embedding, whereby the label $y$ is noisy, $s-1$ sibling classes of $y$ are sampled as negative labels $y_{neg}$, i.e., "wrong classes".

2. Based on these data, a loss function is calculated which takes into account the "actual" training data as a first term $-\log(f(x,y))$ and the negative samples as a second term $\sum_j^{s-1} \log\left(1 - f(x, y_{neg,j})\right)$. The loss function loss is thus formed as:

$$loss\left(y, y_{neg}\right) = -\log(f(x,y)) + \sum_j^{s-1} \log\left(1 - f(x, y_{neg,j})\right).$$

hereby y is the true label, ŷ the prediction and $\tilde{y}$ is the noisy label.

The loss function represents a multidimensional function describing differences between the desired value $\tilde{y}$ and the predicted value ŷ of the class labels with a multitude of parameters such as the weights used inside the neural network between different neurons. These parameters are then adapted in order to minimize the loss function.

For the minimization, a gradient of the loss function is calculated. Thus, by the neural network architecture the "hidden function" which assigns a class label to a certain input can be modelled- provided that sufficient training data are available so that the "hidden function" can be approximated.

The advantage of the tree-based negative samples is that they ensure efficient gradients. By efficient is meant that only a subset of the possible class labels is used instead of an inefficient approach for which every possible class label is taken as a negative label. Because these are mostly equally 'unlikely', they do not provide any additional gradient information.

The gradients, which are then used for updating the ML model's LPM parameters, are efficient, i.e., significant, since instances of sibling classes are most likely also close in the decision surface of the ML model LPM.

Tree-based beam search TBBS in inference/application scenario

In an inference scenario, i.e., an application of the trained ML model on descriptions x for which a class label is to be assigned, it would still be necessary for each input x to determine a score against all leaf classes in the whole number of leaf classes $|V_{leaf}|$ contained in the taxonomy tree T. This is computationally intensive and requires therefore computation time which can be too long, especially if the user expects a near real-time response.

The proposed inference procedure is a beam search which makes use of the taxonomy tree structure. It can be recursively described as:

$$\texttt{Start with beam} = \{root\}$$

Repeat while next level, i.e., there is a child node of the preceding node, exists:

1. Take as possible candidates all child nodes of the previous node and extend the existing beam to obtain a set of new beams leading to the child nodes or mathematically expressed

$$Candidates = \{children(node)|\forall node \in beam\}$$

2. Calculate then the beam for the description x for a subset of the "intermediate classes" represented by a node at the current level. The subset is determined by a beam width B, which could be, e.g., chosen as 1 so that only the two direct neighbors at the respective level are taken:

$$beam' = top_B\left(f\left(x, y_{level,i}\right) \forall i \in Candidates\right)$$

Descend into next level with beam=beam'

This finally returns the top leaf classes within the beam or "top B leaf classes".

This inference procedure results in $b * B * \log_b(|V_{learn}|)$ model inputs, with beam width $B$ and branching factor $b$ of the taxonomy tree.

With regard to Fig.2 a search with beam width 1 is detailed. This beam search is referred to also as greedy search: Starting from root node Root with a given description x, one proceeds to layer 1 L1 with intermediate nodes A and B and calculates their score. The score is calculated by determining whether it is more likely that the description x matches the intermediate label associated with node B or that of node A. If A has a higher score, then one proceeds only to the children nodes AA and AB of A at the next level L2, the branches leading to and from node B are disregarded. Again, the scores of nodes AA and AB are calculated and the respective path along the nodes is further prosecuted. This is repeated until the leaf nodes are reached and the class label having the highest score is used as prediction of the true class label.

As said, by choosing a beam width >1, not only the best alternative is taken, but a number of alternatives determined by the beam width. Taking the example of Fig. 2, at level 1 the probability that x matches label A under the condition having started from "Root, is e.g., 0,56. With a beam width of two, also alternative B having a score of 0,44 would be considered. In the subsequent step at level 2, the probability that the true, intermediate class is AA under the condition that a part of the description, e.g., screw is reflected in Level 1 node A, would again yield a certain probability, e.g. 0,63, whereas the probability for AB was 0,33. On the other hand, the probability for having as intermediate level BA could be 0,25. With a beam width of two, this branch would not be prosecuted further.

In other words, for a beam search at a certain position within the tree, e.g., root, level 1 L1, level 2 L2 or level 3 L3, not only the best alternative for the position would be considered, but the B best alternatives where B denotes the beam width. For these B best alternatives, the conditional probability leading to that intermediate label is determined. In a subsequent step then, starting from the intermediate label node for which the highest conditional probability was calculated, in the subsequent level again the B best alternatives are considered.

This considerably reduces the number of computations.

System components and data flow for training and inference

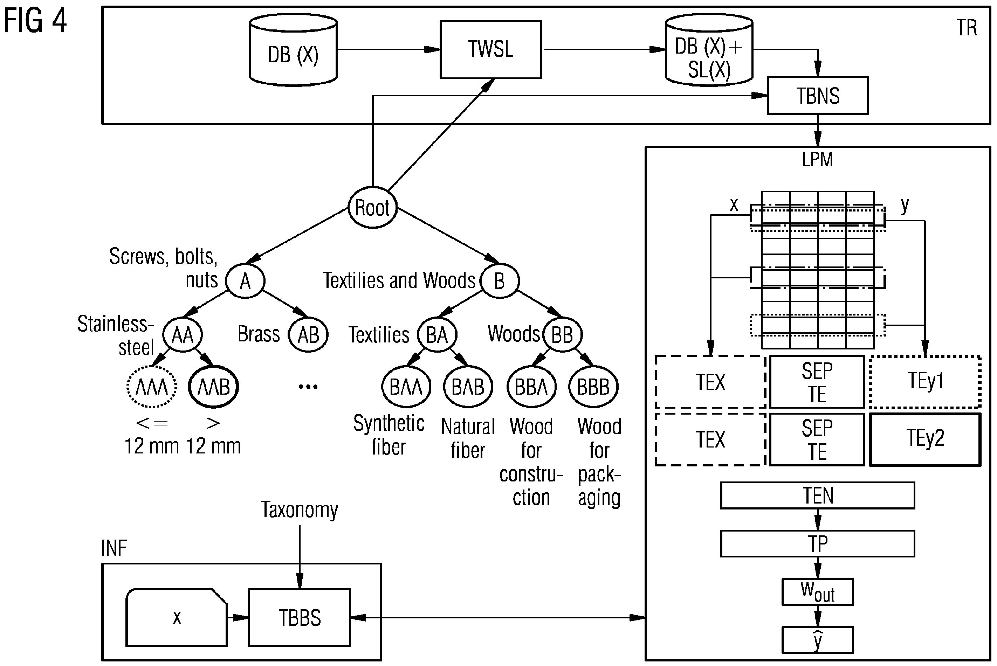

In Fig. 4 an overview of training TR and inference INF is depicted.

For the training TR the database (DB(X)) containing the instances $(x,\tilde{y})$ is enriched with tree weighted soft labels TWSL which are determined as described in relation to Fig.2.

Thus, an enriched data base DB(X)+SL(X) obtained which can be used for training of the link prediction ML model LPM.

According to an advantageous embodiment the training is further made more effective by a "negative sampling". By a tree-based negative sampling TBNS, as set out in section "tree-based negative sampling", the number of computations is reduced since not all class labels are considered.

The tree weighted soft labels TWSL as well as the tree-based negative sampling make use of the tree structure of the taxonomy tree T.

These data are used for the training of the link prediction model LPM.

In an inference or application scenario INF also use of the taxonomy described by the taxonomy tree T is made in that a tree-based beam search TBBS is applied to limit the number of class labels y and choose the most relevant class labels that enter the link prediction model LPM.

Remarks regarding all embodiments

In the context of this application, the classification made by using a classification system or method is applied to manufacture e.g., to use equivalent electronic components or circuits, electric designs or parts thereof, if it suffices the requirements for the respective product. By having classified components, manufacturing can be facilitated and often the costs can be reduced.

Further, the classification method or system may be applied to the purchase of goods in order to bundle certain groups of goods, e.g., commodity products, to reduce logistic efforts and obtain equivalent goods e.g., from different manufacturers.

The term "classification device" may refer to a computational unit or computer on which the instructions can be performed. The term "computer" may refer to a local processing unit, on which the client uses the classification tool, as well as to a distributed set of processing units or services rented from a cloud provider. Thus, the term "computer" covers any electronic device with data processing properties, e.g., personal computers, servers, clients, embedded systems, programmable logic controllers (PLCs), FPGAs, ASICs handheld computer systems, pocket PC devices, mobile radio devices, smart phones, devices or any other communication devices that can process data with computer support, processors and other electronic devices for data processing. Computers may comprise one or more processors and memory units and may be part of a computer system. Further, the term computer system includes general purpose as well as special purpose data processing machines, routers, bridges, switches, and the like, that are standalone, adjunct or embedded.

The term "user" may in particular refer to an individual, a group of individuals sharing at least a part of properties or features or a company.

In the foregoing description, various aspects of the present invention have been described. However, it will be understood by those skilled in the art that the present invention may be practiced with only some or all aspects of the present invention. For purposes of explanation, specific configurations are set forth in order to provide a thorough understanding of the present invention. However, it will also be apparent to those skilled in the art that the present invention may be practiced without these specific details.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Parts of the description are presented in terms of operations performed by a computer system, using terms such as computations, data, state, link, fault, packet, and the like, consistent with the manner commonly employed by those skilled in the art to convey the substance of their work to others skilled in the art. As is well understood by those skilled in the art, these quantities take the form of electrical, magnetic, or optical signals capable of being stored, transferred, combined, and otherwise manipulated through mechanical and electrical components of the computer system.

Additionally, various operations have been described as multiple discrete steps in turn in a manner that is helpful to understand the present invention. However, the order of description should not be construed as to imply that these operations are necessarily order dependent, in particular, the order of their presentation.

***References:***

*[1]* Training Highly Multiclass Classifiers, Gupta et al., Journal of Machine Learning Research 15 (2014) 1461-1492

*[2]* Clusterability as an Alternative to Anchor Points When Learning with Noisy Labels, Zhu et al., Proceedings of the 38th International Conference on Machine Learning, PMLR 139, 2021.

*[3]* Attention Is All You Need, Ashish Vaswani et al. (2017), arXiv:1706.03762v5 [cs.CL] 6 Dec 2017

*[4]* Learning from Noisy Labels with Deep Neural Networks: A Survey, Song et al., arXiv:2007.08199v7 [cs.LG] 10 Mar 2022

**Claims**

1. Computer implemented method for classification of an object having a set of properties into a class containing objects with at least one common property,

   - said classes being arranged in a taxonomy tree (T) being denoted by a class label and
   - said classification being performed by using a trained link prediction model (LPM) which provides, for a textual description ($x_i$) of an object, a prediction ($\hat{y}$) of a class label of said object,
   - wherein for the link prediction model (LPM) the textual description ($x_i$) of an object and the taxonomy tree (T) is used as input and

- wherein the taxonomy tree (T) comprises a set of nodes (V) and a set of directed edges (E) leading from a root node (Root) across nodes in at least one intermediate level (L1,L2), said nodes representing intermediate class labels, to leaf nodes ($V_{leaf}$) at a final level (L3), said leaf nodes ($V_{leaf}$) not having child nodes and denoting a class label and said taxonomy tree (T) containing a structure information defined by a branching ratio (b) at each node and a number of levels,

- wherein for the application of the link prediction model (LPM), structure information is used so that the number of computations to obtain a class label for a given textual description ($x_i$) is reduced by pursuing only selected paths from the root node (Root) to leaf nodes ($V_{leaf}$)

- wherein for the reduction of the number of computations for obtaining a prediction (ŷ) of a class label, a beam search in the taxonomy tree (T) with the following steps is performed:

> a) starting from the root node (Root) of the taxonomy tree (T);
> b) taking, at each level (L1, L2, L3), a predefined number (B) of alternative nodes each representing an intermediate class label,
> c) Determining for each of the alternative nodes the score that the description matches the intermediate class label,
> d) proceeding only from the node representing the intermediate class label with the highest score to the subsequent level (L2, L3),
> e) repeating steps B) and C) until the final level (L3) of the taxonomy tree (T) is reached and taking the class label of the leaf node ($V_{leaf}$) with the highest score as prediction (ŷ).

2. Method according to the previous claim, wherein an intermediate class label represented by a first node at an intermediate level (L1, L2) is formed by adding a further description element to the description represented by the parent node to that first node and the class label denoted by a leaf node ($V_{leaf}$) contains all description elements.

3. Method according to any of the previous claims, wherein the link prediction model (LPM) is based on a neural network architecture comprising an encoder network (EN) and a decoder network (DN) and the prediction (ŷ) of a class label for a given description ($x_i$) is made by performing the following steps:

> a) Using the description ($x_i$) and the set of class labels (Y) as input to the link prediction model (LPM)
> b) Using an embedding of the description ($x_i$) and a class label ($y_i$) out of the set of class labels (Y) which has been produced by using common token embedding vectors, wherein a token is a part of the description ($x_i$) or/and the class label ($y_i$) to form a sequence of token embedding vectors describing the description ($x_i$) and a class label ($y_i$) separated by at least one embedding vector denoting a separator;
> c) Transforming this sequence of token embedding vectors by applying an attention mechanism into a transformed sequence of token embedding vectors reflecting relations between the tokens;
> d) Extracting from the transformed sequence a score ($W_{out}$) indicating a probability that the prediction (ŷ) of the class label is the correct class for the description ($x_i$);
> e) Repeating steps b through d through the subset of class labels defined by the selected paths from root node (Root) to leaf node ($V_{leaf}$) which have been selected according to the structure information of the taxonomy tree.

4. Method according to the previous claim, wherein a token is an arbitrary part of the description ($x_i$) or of the class label ($y_i$)), in particular an n-gram, wherein n is a natural number, or a separation element.

5. Method according to any of the previous claims, wherein for the training of the link prediction model (LPM) training data are enhanced by making use of the tree structure, which in particular indicates a likelihood that neighbored classes are confounded and a description ($x_i$) is wrongly assigned to a wrong class label.

6. Computer implemented method according to any of the previous claims, wherein for the training of the link prediction model the training data are enriched by performing the following steps:

> a) Using instances ($x_i$, $\tilde{y}_i$) of training data comprising a description (x) out of a set of descriptions (X) and an assigned label ($\widetilde{y}$) out of a set of class labels (Y)
> b) Assigning soft labels to the assigned label ($\tilde{y}_i$) described by

$$P(\tilde{y}_i = y_i) = 1 - \frac{1}{k} \sum_{\tilde{y}_j \in D_{knn,i}} \widetilde{td}(\tilde{y}_i, \tilde{y}_j)$$

where $D_{knn,i}$ is the set of k nearest neighbors of an instance $(x_i, \tilde{y}_i) \in D$,

k is the number of nearest neighbors,

$\tilde{y}_i$ is the assigned class label for the textual description $(x_i)$

$y_i$ is the true class label for textual description $x_i$

J is a variable running through all the next neighbors

$\widetilde{td}(\tilde{y}_i, \tilde{y}_j)$ is a normalized distance between $\tilde{y}_i$ and $\tilde{y}_j$.

7. Method according to the previous claim, wherein the normalized distance is determined as

$$\widetilde{td}(y_1, y_2) = \frac{td(y_1, y_2)}{\max\limits_{i,j} td(y_i, y_j)},$$

where $\widetilde{td}: V x V$ ranges between 0 and 1 and

$td(y_1, y_2)$ is the shortest path between two leaf nodes $(V_{leaf})$ denoting a class label $(y_1, y_2)$ and

$\max\limits_{i,j} td(y_i, y_j)$ is the maximum number of hops possible in the given taxonomy tree (T).

8. Computer implemented method according to any of the previous claims, wherein for the training of the link prediction model (LPM) for each instance $(x_i, \tilde{y}_i)$ of the training data, a set of size s-1, where s is a natural number, of sibling classes are taken as negative labels $(y_{neg,j})$ and the parameters of the link prediction model (LPM) are adapted by use of a loss function which is defined as

$$loss(y, y_{neg}) = -\log(f(x,y) + \sum_{j}^{s-1} \log(1 - f(x, y_{neg,j}))$$

where j is a parameter going through the set of negative labels $(y_{neg,j})$.

9. Method according to the previous claim wherein the set size s-1 of the neighboring classes is determined by at least one of:

- Considering the structure of the taxonomy tree
- Considering at least one n-gram contained in the description
- Considering the set of n-grams forming the description.

10. Method according to any of the previous claims, wherein the prediction $(\tilde{y}_i)$ of a class label of the textual description $(x_i)$ of an object is used for at least one of the following purposes

- Use of objects having a common class label for a technical device without regard to further properties of the object,
- Common purchase of objects having a common class label.

11. Method according to any of the previous claims wherein the object is at least one of

- a construction component
- an electrical or electronic component
- a specific material
- a specific intermediate or final product.

12. Computer program comprising program instructions that cause, when the program is executed by a computer, the computer to carry out a method according to any of the previous claims.

13. Classification device, wherein the classification device stores or/and provides the computer program according to the previous claim, said classification device having a communication interface via which entries used in the program can be made or/and by which access to a platform is granted on which the computer program is performed, said classification device for use in at least one of the following:

- an engineering tool for the design of an electrical, electronical or mechanical system comprising variety of items proposing a selection of items to a specific user, wherein objects of one class are provided as items;
- a logistics tool combining objects of one class for a combined task, in particular an order process;
- a maintenance recommender proposing a maintenance action for a certain component assigned to a class, whereby the maintenance action depends on the assigned class.

14. Classification device according to the previous claim realized by a computational unit or a web interface.

**Patentansprüche**

1. Computerimplementiertes Verfahren zum Klassifizieren eines Objekts mit einer Menge von Eigenschaften in eine Klasse, die Objekte mit mindestens einer gemeinsamen Eigenschaft umfasst,

- wobei die Klassen in einem Taxonomiebaum (T) angeordnet sind, der durch eine Klassenbezeichnung gekennzeichnet ist, und
- wobei das Klassifizieren unter Verwendung eines trainierten Link-Vorhersagemodells (LPM) durchgeführt wird, das für eine textuelle Beschreibung ($x_i$) eines Objekts eine Vorhersage ($ŷ$) einer Klassenbezeichnung des Objekts vorsieht,
- wobei für das Link-Vorhersagemodell (LPM) die textuelle Beschreibung ($x_i$) eines Objekts und der Taxonomiebaum (T) als Eingabe verwendet werden, und
- wobei der Taxonomiebaum (T) eine Menge von Knoten (V) und eine Menge gerichteter Kanten (E) umfasst, die von einem Wurzelknoten (Root) über Knoten auf mindestens einer Zwischenebene (L1, L2), wobei die Knoten Zwischenklassenbezeichnungen darstellen, zu Blattknoten ($V_{leaf}$) auf einer Endebene (L3) führen, wobei die Blattknoten ($V_{leaf}$) keine Kindknoten aufweisen und eine Klassenbezeichnung angeben, und der Taxonomiebaum (T) Strukturinformationen enthält, die durch ein Verzweigungsverhältnis (b) bei jedem Knoten und eine Anzahl von Ebenen definiert sind,
- wobei zur Anwendung des Link-Vorhersagemodells (LPM) Strukturinformationen verwendet werden, sodass die Anzahl der Berechnungen zur Ermittlung einer Klassenbezeichnung für eine gegebene textuelle Beschreibung ($x_i$) reduziert wird, indem nur ausgewählte Pfade vom Wurzelknoten (Root) zu Blattknoten ($V_{leaf}$) verfolgt werden,
- wobei zur Verringerung der Anzahl der Berechnungen zur Ermittlung einer Vorhersage ($ŷ$) einer Klassenbezeichnung eine Strahlsuche im Taxonomiebaum (T) mit den folgenden Schritten durchgeführt wird:

a) Starten vom Wurzelknoten (Root) des Taxonomiebaums (T);
b) Auswählen auf jeder Ebene (L1, L2, L3) einer vorbestimmten Anzahl (B) alternativer Knoten, die jeweils eine Zwischenklassenbezeichnung darstellen,
c) Bestimmen für jeden der alternativen Knoten der Punktzahl, mit der die Beschreibung der Zwischenklassenbezeichnung entspricht,
d) Fortfahren nur von dem Knoten, der die Zwischenklassenbezeichnung mit der höchsten Punktzahl darstellt, zur nachfolgenden Ebene (L2, L3),
e) Wiederholen der Schritte B) und C), bis die Endebene (L3) des Taxonomiebaums (T) erreicht ist, und Verwenden der Klassenbezeichnung des Blattknotens ($V_{leaf}$) mit der höchsten Punktzahl als Vorhersage ($ŷ$).

2. Verfahren nach dem vorhergehenden Anspruch, wobei eine Zwischenklassenbezeichnung, die durch einen ersten Knoten auf einer Zwischenebene (L1, L2) dargestellt ist, durch Hinzufügen eines weiteren Beschreibungselements zu der durch den Elternknoten dieses ersten Knotens dargestellten Beschreibung gebildet wird, und die durch einen Blattknoten ($V_{leaf}$) angegebene Klassenbezeichnung alle Beschreibungselemente enthält.

3. Verfahren nach einem der vorhergehenden Ansprüche, wobei das Link-Vorhersagemodell (LPM) auf einer neuronalen Netzwerkarchitektur basiert, die ein Encoder-Netzwerk (EN) und ein Decoder-Netzwerk (DN) umfasst, und die Vorhersage ($\hat{y}$) einer Klassenbezeichnung für eine gegebene Beschreibung ($x_i$) durch die folgenden Schritte erfolgt:

a) Verwenden der Beschreibung ($x_i$) und der Menge von Klassenbezeichnungen (Y) als Eingabe für das Link-Vorhersagemodell (LPM);
b) Verwenden einer Einbettung der Beschreibung ($x_i$) und einer Klassenbezeichnung ($y_i$) aus der Menge von Klassenbezeichnungen (Y), die unter Verwendung gemeinsamer Token-Einbettungsvektoren erzeugt wurde, wobei ein Token ein Teil der Beschreibung ($x_i$) und/oder der Klassenbezeichnung ($y_i$) ist, zum Bilden einer Sequenz von Token-Einbettungsvektoren, die die Beschreibung ($x_i$) und die Klassenbezeichnung ($y_i$) beschreiben, getrennt durch mindestens einen Einbettungsvektor, der einen Separator angibt;
c) Transformieren dieser Sequenz von Token-Einbettungsvektoren durch Anwenden eines Aufmerksamkeitsmechanismus in eine transformierte Sequenz von Token-Einbettungsvektoren, die Relationen zwischen den Tokens widerspiegelt;
d) Extrahieren einer Punktzahl ($W_{out}$) aus der transformierten Sequenz, die eine Wahrscheinlichkeit angibt, dass die Vorhersage ($\hat{y}$) der Klassenbezeichnung die korrekte Klasse für die Beschreibung ($x_i$) ist;
e) Wiederholen der Schritte b bis d für die Teilmenge der Klassenbezeichnungen, die durch die ausgewählten Pfade vom Wurzelknoten (Root) zum Blattknoten ($V_{leaf}$) definiert sind, die gemäß den Strukturinformationen des Taxonomiebaums ausgewählt wurden.

4. Verfahren nach dem vorhergehenden Anspruch, wobei ein Token ein beliebiger Teil der Beschreibung ($x_i$) oder der Klassenbezeichnung ($y_i$)) ist, insbesondere ein n-Gramm, wobei n eine natürliche Zahl ist, oder ein Trennelement.

5. Verfahren nach einem der vorhergehenden Ansprüche, wobei für das Training des Link-Vorhersagemodells (LPM) Trainingsdaten durch Nutzung der Baumstruktur verbessert werden, die insbesondere eine Wahrscheinlichkeit angebn, dass benachbarte Klassen verwechselt werden und eine Beschreibung ($x_i$) fälschlicherweise einer falschen Klassenbezeichnung zugeordnet wird.

6. Computerimplementiertes Verfahren nach einem der vorhergehenden Ansprüche, wobei für das Training des Link-Vorhersagemodells die Trainingsdaten durch die folgenden Schritte angereichert werden:

a) Verwenden von Instanzen ($x_i,\tilde{y}_i$) von Trainingsdaten, die eine Beschreibung (x) aus einer Menge von Beschreibungen (X) und eine zugeordnete Bezeichnung ($\tilde{y}$) aus einer Menge von Klassenbezeichnungen (Y) umfassen
b) Zuordnen weicher Bezeichnungen zur zugeordneten Bezeichnung, ($\tilde{y}_i$) beschrieben durch:

$$P(\tilde{y}_i = y_i) = 1 - \frac{1}{k} \sum_{\tilde{y}_j \in D_{knn,i}} \widetilde{td}(\tilde{y}_i, \tilde{y}_j)$$

wobei $D_{knn,i}$ die Menge von k nächsten Nachbarn einer Instanz ($x_i,\tilde{y}_i$) $\in D$, ist,
k die Anzahl der nächsten Nachbarn ist,
$\tilde{y}_i$ die zugeordnete Klassenbezeichnung für die textuelle Beschreibung ($x_i$) ist,
$y_i$ die wahre Klassenbezeichnung für die textuelle Beschreibung $x_i$ ist, J eine Variable ist, die über alle nächsten Nachbarn läuft, $\widetilde{td}(\tilde{y}_i, \tilde{y}_j)$ ein normalisierter Abstand zwischen $\tilde{y}_i$ und $\tilde{y}_j$ ist.

7. Verfahren nach dem vorhergehenden Anspruch, wobei die normalisierte Distanz wie folgt bestimmt wird:

$$\widetilde{td}(y_1, y_2) = \frac{td(y_1,y_2)}{\max_{i,j} td(y_i,y_j)},$$

wobei $\widetilde{td}: V x V$ zwischen 0 und 1 liegt und
$td(y_1, y_2)$ der kürzeste Pfad zwischen zwei Blattknoten ($V_{leaf}$) ist, die eine Klassenbezeichnung ($y_1, y_2$) angeben, und

$$\max_{i,j} td(y_i, y_j)$$ die maximal mögliche Anzahl von Sprüngen im gegebenen Taxonomiebaum (T) ist.

8. Computerimplementiertes Verfahren nach einem der vorhergehenden Ansprüche, wobei für das Training des Link-Vorhersagemodells (LPM) für jede Instanz $(x_i, \tilde{y}_i)$ der Trainingsdaten eine Menge der Größe s-1, wobei s eine natürliche Zahl ist, von Geschwisterklassen als Negativbezeichnungen $(y_{neg,j})$ verwendet wird und die Parameter des Link-Vorhersagemodells (LPM) durch Verwendung einer Verlustfunktion angepasst werden, die wie folgt definiert ist:

$$loss(y, y_{neg}) = -\log(f(x,y) + \sum_{j}^{s-1} \log(1 - f(x, y_{neg,j})))$$

wobei j ein Parameter ist, der die Menge der Negativbezeichnungen $(y_{neg,j})$ durchläuft.

9. Verfahren nach dem vorhergehenden Anspruch, wobei die Mengengröße s-1 der benachbarten Klassen bestimmt wird durch mindestens eines von Folgendem:

- Berücksichtigen der Struktur des Taxonomiebaums
- Berücksichtigen mindestens eines n-Gramms, das in der Beschreibung enthalten ist
- Berücksichtigen der Menge der n-Gramme, die die Beschreibung bilden.

10. Verfahren nach einem der vorhergehenden Ansprüche, wobei die Vorhersage $(\tilde{y}_i)$ einer Klassenbezeichnung der textuellen Beschreibung $(x_i)$ eines Objekts für mindestens einen der folgenden Zwecke verwendet wird:

- Verwenden von Objekten mit gemeinsamer Klassenbezeichnung für ein technisches Gerät ohne Berücksichtigung weiterer Eigenschaften des Objekts,
- Gemeinsamer Bezug von Objekten mit gemeinsamer Klassenbezeichnung.

11. Verfahren nach einem der vorhergehenden Ansprüche, wobei das Objekt mindestens eines von Folgendem ist:

- ein Bauelement
- ein elektrisches oder elektronisches Bauteil
- ein bestimmtes Material
- ein bestimmtes Zwischen- oder Endprodukt.

12. Computerprogramm, umfassend Programmanweisungen, die, wenn das Programm von einem Computer ausgeführt wird, den Computer veranlassen, ein Verfahren nach einem der vorhergehenden Ansprüche auszuführen.

13. Klassifikationsvorrichtung, wobei die Klassifikationsvorrichtung das Computerprogramm nach dem vorhergehenden Anspruch speichert und/oder vorsieht, wobei die Klassifikationsvorrichtung eine Kommunikationsschnittstelle aufweist, über die Eingaben vorgenommen werden können, die im Programm verwendet werden, und/oder über die Zugang zu einer Plattform gewährt wird, auf der das Computerprogramm durchgeführt wird, wobei die Klassifikationsvorrichtung in mindestens einem von Folgendem verwendet wird:

- einem technischen Werkzeug für die Konstruktion eines elektrischen, elektronischen oder mechanischen Systems, das eine Vielzahl von Gegenständen umfasst, wobei Objekte einer Klasse als Gegenstände vorgesehen sind;
- einem Logistik-Werkzeug, das Objekte einer Klasse für eine kombinierte Aufgabe kombiniert, insbesondere einen Bestellprozess;
- einem Wartungsempfehler, der eine Wartungsmaßnahme für eine bestimmte Komponente vorschlägt, die einer Klasse zugeordnet ist, wobei die Wartungsmaßnahme von der zugeordneten Klasse abhängt.

14. Klassifikationsvorrichtung nach dem vorhergehenden Anspruch, realisiert durch eine Recheneinheit oder eine Web-Schnittstelle.

**Revendications**

1. Procédé mis en œuvre par ordinateur pour la classification d'un objet ayant un ensemble de propriétés dans une classe contenant des objets dotés d'au moins une propriété commune,

   - lesdites classes étant agencées dans un arbre taxonomique (T) qui est désigné par une étiquette de classe et
   - ladite classification étant réalisée en utilisant un modèle de prédiction de lien (LPM) entraîné qui fournit, pour une description textuelle ($x_i$) d'un objet, une prédiction ($\hat{y}$) d'une étiquette de classe dudit objet,
   - dans lequel pour le modèle de prédiction de lien (LPM) la description textuelle ($x_i$) d'un objet et de l'arbre taxonomique (T) est utilisée comme entrée et
   - dans lequel l'arbre taxonomique (T) comprend un ensemble de nœuds (V) et un ensemble de bords dirigés (E) allant d'un nœud racine (Root), par des nœuds dans au moins un niveau intermédiaire (L1, L2), lesdits nœuds représentant des étiquettes de classe intermédiaires, à des nœuds feuilles ($V_{leaf}$) à un niveau final (L3), lesdits nœuds feuilles ($V_{leaf}$) n'ayant pas de nœuds enfants et désignant une étiquette de classe et ledit arbre taxonomique (T) contenant une information de structure définie par un rapport de ramification (b) au niveau de chaque nœud et un nombre de niveaux,
   - dans lequel pour l'application du modèle de prédiction de lien (LPM), l'information de structure est utilisée de telle sorte que le nombre de calculs pour obtenir une étiquette de classe pour une description textuelle donnée ($x_i$) soit réduit par le suivi, uniquement, de chemins sélectionnés du nœud racine (Root) à des nœuds feuilles ($V_{leaf}$)
   - dans lequel, pour la réduction du nombre de calculs pour l'obtention d'une prédiction ($\hat{y}$) d'une étiquette de classe, une recherche en faisceau dans l'arbre taxonomique (T) avec les étapes suivantes est réalisée :

     a) le démarrage à partir du nœud racine (Root) de l'arbre taxonomique (T) ;
     b) la prise, à chaque niveau (L1, L2, L3), d'un nombre prédéfini (B) de nœuds alternatifs représentant chacun une étiquette de classe intermédiaire,
     c) la détermination, pour chacun des nœuds alternatifs, du score selon lequel la description concorde avec l'étiquette de classe intermédiaire,
     d) la poursuite uniquement du nœud représentant l'étiquette de classe intermédiaire ayant le score le plus élevé au niveau suivant (L2, L3),
     e) la répétition des étapes B) et C) jusqu'à ce que le niveau final (L3) de l'arbre taxonomique (T) soit atteint et la prise de l'étiquette de classe du nœud feuille ($V_{leaf}$) ayant le score le plus élevé comme prédiction ($\hat{y}$).

2. Procédé selon la revendication précédente, dans lequel une étiquette de classe intermédiaire représentée par un premier nœud à un niveau intermédiaire (L1, L2) est formée par l'ajout d'un élément de description supplémentaire à la description représentée par le nœud parent à ce premier nœud et l'étiquette de classe désignée par un nœud feuille ($V_{leaf}$) contient tous les éléments de description.

3. Procédé selon l'une quelconque des revendications précédentes, dans lequel le modèle de prédiction de lien (LPM) est basé sur une architecture de réseau de neurones comprenant un réseau de codeurs (EN) et un réseau de décodeurs (DN) et la prédiction ($\hat{y}$) d'une étiquette de classe pour une description donnée ($x_i$) est effectuée par la réalisation des étapes suivantes :

   a) l'utilisation de la description ($x_i$) et de l'ensemble d'étiquettes de classe (Y) comme entrée du modèle de prédiction de lien (LPM)
   b) l'utilisation d'une intégration de la description ($x_i$) et d'une étiquette de classe ($y_i$) parmi l'ensemble d'étiquettes de classe (Y) qui a été produit en utilisant des vecteurs d'intégration de jeton communs, dans lequel un jeton fait partie de la description ($x_i$) et/ou de l'étiquette de classe ($y_i$) pour former une séquence de vecteurs d'intégration de jeton décrivant la description ($x_i$) et une étiquette de classe ($y_i$) séparées par au moins un vecteur d'intégration désignant un séparateur ;
   c) la transformation de cette séquence de vecteurs d'intégration de jeton par l'application d'un mécanisme d'attention en une séquence transformée de vecteurs d'intégration de jeton reflétant des relations entre les jetons ;
   d) l'extraction, à partir de la séquence transformée, d'un score ($W_{out}$) indiquant une probabilité que la prédiction ($\hat{y}$) de l'étiquette de classe soit la classe correcte pour la description ($x_i$) ;
   e) la répétition des étapes b à d par le biais du sous-ensemble d'étiquettes de classe défini par les chemins sélectionnés du nœud racine (Root) au nœud feuille ($V_{leaf}$) qui ont été sélectionnés selon l'information de structure de l'arbre taxonomique.

**4.** Procédé selon la revendication précédente, dans lequel un jeton est une partie arbitraire de la description ($x_i$) ou de l'étiquette de classe ($y_i$), en particulier un n-gramme, dans lequel n est un nombre entier naturel, ou un élément de séparation.

**5.** Procédé selon l'une quelconque des revendications précédentes, dans lequel pour l'entraînement du modèle de prédiction de lien (LPM), des données d'entraînement sont améliorées par l'utilisation de la structure de l'arbre, qui en particulier indique une probabilité que des classes voisines soient confondues et qu'une description ($x_i$) soit attribuée par erreur à une étiquette de classe erronée.

**6.** Procédé mis en œuvre par ordinateur selon l'une quelconque des revendications précédentes, dans lequel pour l'entraînement du modèle de prédiction de lien, les données d'entraînement sont enrichies par la réalisation des étapes suivantes :

a) l'utilisation d'instances ($x_i$, $\tilde{y}_i$) de données d'entraînement comprenant une description (x) parmi un ensemble de descriptions (X) et une étiquette attribuée $\widetilde{(y)}$ parmi un ensemble d'étiquettes de classe (Y)

b) l'attribution d'étiquettes logicielles à l'étiquette attribuée ($\tilde{y}_i$) décrites par

$$P(\tilde{y}_i = y_i) = 1 - \frac{1}{k} \sum_{\widetilde{y_J} \in D_{knn,i}} \widetilde{td}(\tilde{y}_i, \tilde{y}_j)$$

où $D_{knn,\,i}$ est l'ensemble des k plus proches voisins d'une instance ($x_i$, $\tilde{y}_i$) $\in D$,
k est le nombre de plus proches voisins,
$\tilde{y}_i$ est l'étiquette de classe attribuée pour la description textuelle ($x_i$),
$y_i$ est l'étiquette de classe vraie pour la description textuelle $x_i$,
J est une variable parcourant tous les voisins suivants,

$\widetilde{td}(\tilde{y}_i, \tilde{y}_J)$ est une distance normalisée entre $\tilde{y}_i$ et $\tilde{y}_j$.

**7.** Procédé selon la revendication précédente, dans lequel la distance normalisée est déterminée comme étant

$$\widetilde{td}(y_1, y_2) = \frac{td(y_1, y_2)}{\max_{i,j} td(y_i, y_j)}$$

où $\widetilde{td} : V x V$ varie entre 0 et 1 et
$td(y_1, y_2)$ est le chemin le plus court entre deux nœuds feuilles ($V_{leaf}$) désignant une étiquette de classe ($y_1$, $y_2$) et

$\max_{i,j} td(y_i, y_j)$ est le nombre maximal de sauts possibles dans l'arbre taxonomique (T) donné.

**8.** Procédé mis en œuvre par ordinateur selon l'une quelconque des revendications précédentes, dans lequel pour l'entraînement du modèle de prédiction de lien (LPM) pour chaque instance ($x_i$, $\tilde{y}_i$) des données d'entraînement, un ensemble de dimension s-1, où s est un nombre entier naturel, de classes sœurs sont prises comme étiquettes négatives ($y_{neg,j}$) et les paramètres du modèle de prédiction de lien (LPM) sont adaptés par l'utilisation d'une fonction de perte qui définie comme étant

$$loss(y, y_{neg}) = -\log(f(x, y) + \sum_{j}^{s-1} \log(1 - f(x, y_{neg,j}))$$

où j est un paramètre traversant l'ensemble d'étiquettes négatives ($y_{neg,j}$).

**9.** Procédé selon la revendication précédente, dans lequel la taille d'ensemble s-1 des classes voisines est déterminée par au moins l'un parmi :

- la prise en compte de la structure de l'arbre taxonomique
- la prise en compte d'au moins un n-gramme contenu dans la description
- la prise en compte de l'ensemble des n-grammes formant la description.

10. Procédé selon l'une quelconque des revendications précédentes, dans lequel la prédiction ($\tilde{y}_i$) d'une étiquette de classe de la description textuelle ($x_i$) d'un objet est utilisée pour au moins l'un des objectifs suivants

- l'utilisation d'objets ayant une étiquette de classe commune pour un dispositif technique indépendamment d'autres propriétés de l'objet,
- l'achat en commun d'objets ayant une étiquette de classe commune.

11. Procédé selon l'une quelconque des revendications précédentes, dans lequel l'objet est au moins l'un parmi

- un composant de construction
- un composant électrique ou électronique
- un matériel spécifique
- un produit intermédiaire ou final spécifique.

12. Programme d'ordinateur comprenant des instructions de programme qui amènent, lorsque le programme est exécuté par un ordinateur, l'ordinateur à mettre en œuvre un procédé selon l'une quelconque des revendications précédentes.

13. Dispositif de classification, dans lequel le dispositif de classification stocke et/ou fournit le programme d'ordinateur selon la revendication précédente, ledit dispositif de classification ayant une interface de communication par le biais de laquelle des écritures utilisées dans le programme peuvent être effectuées et/ou par lequel un accès à une plateforme est accordé sur laquelle le programme d'ordinateur est exécuté, ledit dispositif de classification étant destiné à une utilisation dans au moins l'un parmi ce qui suit :

- un outil d'ingénierie pour la conception d'un système électrique, électronique ou mécanique comprenant une variété d'articles proposant une sélection d'articles à un utilisateur spécifique, dans lequel des objets d'une classe sont fournis sous la forme d'articles ;
- un outil logistique combinant des objets d'une classe pour une tâche combinée, en particulier un processus de passation de commande ;
- un dispositif de recommandation de maintenance proposant une action de maintenance pour un certain composant attribué à une classe, l'action de maintenance dépendant de la classe attribuée.

14. Dispositif de classification selon la revendication précédente exécuté par une unité de calcul ou une interface web.

# FIG 1

# FIG 2

EP 4 523 158 B1

## FIG 3

T

Root

A — Screws, bolts, nuts
B — Textiles and Woods (L1)

AA — Stainless-steel
AB — Brass
BA — Textiles (L2)
BB — Woods (L2)

AAA (<= 12 mm)
AAB (> 12 mm)
BAA — Synthetic fiber
BAB — Natural fiber
BBA — Wood for constru-ction
BBB — Wood for pack-aging (L3)

$x_i \in X$

LPM

STE

EN
TEy1
TEy2
$n * s$
SEP TE
SEP TE
TEX
TEX
TEN
TP
DN
$W_{out}$
$\hat{y}$

$P(y{=}AAA\,|\,X)\sim0.05$
$P(y{=}AAB\,|\,X)\sim0.95$

# FIG 4

EP 4 523 158 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11321580 B1, WALCZAK KRZYSZTOF MARCIN

- US 2021150346 A1

**Non-patent literature cited in the description**

- **GUPTA et al.** Training Highly Multiclass Classifiers. *Journal of Machine Learning Research*, 2014, vol. 15, 1461-1492
- Clusterability as an Alternative to Anchor Points When Learning with Noisy Labels. **ZHU et al.** Proceedings of the 38th International Conference on Machine Learning. PMLR, 2021, vol. 139

- **ASHISH VASWANI et al.** Attention Is All You Need. *arXiv:1706.03762v5 [cs.CL*, 06 December 2017
- **SONG et al.** Learning from Noisy Labels with Deep Neural Networks: A Survey. *arXiv:2007.08199v7 [cs.LG*, 10 March 2022